(19) Europäisches Patentamt
European Patent Office
Office européen des brevets

(11) **EP 3 195 259 B1**

(12) **FASCICULE DE BREVET EUROPEEN**

(45) Date de publication et mention
de la délivrance du brevet:
**06.11.2019 Bulletin 2019/45**

(51) Int Cl.:
**G06T 7/00** (2017.01)   **G06T 7/40** (2017.01)

(21) Numéro de dépôt: **15788463.6**

(86) Numéro de dépôt international:
**PCT/FR2015/052488**

(22) Date de dépôt: **17.09.2015**

(87) Numéro de publication internationale:
**WO 2016/042269 (24.03.2016 Gazette 2016/12)**

(54) **PROCÉDÉ D'IDENTIFICATION DE L'ANISOTROPIE DE LA TEXTURE D'UNE IMAGE NUMÉRIQUE**

VERFAHREN ZUR IDENTIFIZIERUNG DER ANISOTROPIE DER TEXTUR EINES DIGITALEN BILDES

METHOD FOR IDENTIFYING THE ANISOTROPY OF THE TEXTURE OF A DIGITAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.09.2014 FR 1458886**

(43) Date de publication de la demande:
**26.07.2017 Bulletin 2017/30**

(73) Titulaires:
• **Université d'Aix Marseille**
**13284 Marseille Cedex 07 (FR)**
• **Centre National de la Recherche Scientifique**
**75016 Paris (FR)**

(72) Inventeur: **RICHARD, Frédéric Joseph Pierre**
**F-13012 Marseille (FR)**

(74) Mandataire: **Colombo, Michel**
**Innovation Competence Group**
**310, avenue Berthelot**
**69372 Lyon Cedex 08 (FR)**

(56) Documents cités:

• **P Podsiadlo ET AL: "The development of the modified Hurst orientation transform for the characterization of surface topography of wear particles", Tribology Letters, 1 mai 1998 (1998-05-01), pages 215-229, XP055195324, New York DOI: 10.1023/A:1019188129186 Extrait de l'Internet: URL:http://download.springer.com/static/pd f/920/art%3A10.1023%2FA%3A1019188129186.p d f?originUrl=http://link.springer.com/artic le/10.1023/A:1019188129186&token2=exp=1434 036443~acl=/static/pdf/920/art%253A10.1023 %252FA%253A1019188129186.pdf?originUrl=ht t p%3A%2F%2Flink.springer.com%2Farticle%2F1 0 .1023%2FA%**
• **JENNET TOYJANOVA ET AL: "High Resolution, Large Deformation 3D Traction Force Microscopy", PLOS ONE, vol. 9, no. 4, 16 avril 2014 (2014-04-16), page e90976, XP055195328, DOI: 10.1371/journal.pone.0090976**
• **HERMINE BIERMÉ ET AL: "Anisotropic texture modeling and applications to medical image analysis", ESAIM: PROCEEDINGS, vol. 26, 1 janvier 2009 (2009-01-01), pages 100-122, XP055195332, ISSN: 1270-900X, DOI: 10.1051/proc/2009008**
• **L.J P.W VAN VLIET VERBEEK ET AL: "Estimators for Orientation and Anisotropy in Digitized Images", TRIBOLOGY LETTERS 4, 1 janvier 1995 (1995-01-01), pages 442-450, XP055195333,**

- **HERMINE BIERMÉ ET AL: "Parametric estimation for Gaussian operator scaling random fields and anisotropy analysis of bone radiograph textures", MICCAI, 1 janvier 2009 (2009-01-01), pages 13-24, XP055195334,**

**EP 3 195 259 B1**

**Description**

L'invention concerne un procédé d'identification de l'anisotropie de la texture d'une image numérique. L'invention concerne également un procédé pour classer des images numériques selon l'anisotropie de leur texture. L'invention concerne enfin un support d'enregistrement d'informations et un calculateur électronique pour mettre en œuvre ces procédés.

L'article "The development of the modified Hurst orientation transform for the characterization of surface topography of wear particles" by P.Podsiado and G.W. Stachowiak, in Tribology Letters 4 (1998), pages 215-229, décrit une modification de la transformée d'orientation de Hurst pour la caractérisation des particules d'usure. L'article « Statistical tests of anisotropy for fractional brownian textures. Application to full-field digital mammography » de F. Richard et al, J. Math. Imaging. Vis. vol. 36 p. 227-240, doi:10.1007/s10851-009-0181-y, 2010, décrit un procédé connu pour identifier l'anisotropie de la texture d'une image numérique.

Ce procédé présente des inconvénients. En particulier, il comporte la projection, au moyen d'une transformée de Radon, des pixels de l'image selon deux directions de projection, qui sont parallèles aux bords de l'image. Une limitation de ce procédé est que seule une anisotropie de la texture orientée suivant une de ces directions peut être identifiée. Si l'image présente une anisotropie orientée suivant une autre direction (par exemple une diagonale de l'image) alors elle ne sera pas correctement identifiée. Il pourrait être envisagé de projeter l'image suivant des directions additionnelles pour pallier à ce problème. Mais, cela n'est pas souhaitable. En pratique, l'image numérique est définie comme un ensemble de pixels placés sur une grille discrète ou matrice (« lattice » en langue anglaise), c'est-à-dire que les pixels ont pour positions des points de l'espace $\mathbb{Z}^d$. Il n'est pas souhaitable de définir des projections suivant d'autres directions de l'image, car dans ce cas les points projetés n'appartiennent plus à la grille. Il faut alors calculer par interpolation, à partir des points projetés, la valeur des pixels qui appartiennent à la grille. Cela introduit une erreur et dégrade la fiabilité du procédé.

Il existe donc un besoin pour un procédé permettant d'identifier, avec une fiabilité satisfaisante, l'anisotropie de la texture d'une image dans n'importe quelle direction.

L'invention concerne donc un procédé d'identification de l'anisotropie de la texture d'une image numérique conforme à la revendication 1.

Dans le procédé ci-dessus, la transformation comporte la rotation et le changement d'échelle de l'image acquise. Ensuite, le procédé comporte aussi le calcul des p-variations de l'image transformée seulement à partir des pixels de cette image qui occupent une position qui appartient à l'ensemble E. Grâce à cela, il n'est pas nécessaire d'avoir recours à des interpolations pour procéder au calcul des p-variations et cela quel que soit l'angle de la rotation. En se dispensant des interpolations, la fiabilité du procédé ci-dessus, et donc *in fine* l'identification de l'anisotropie, est ainsi améliorée.

En outre, le calcul des incréments $V_{j,k}$ au moyen du noyau v permet de caractériser correctement l'anisotropie de la texture et cela même si l'image présente une « tendance ». Le terme de « tendance » désigne ici une composante de l'intensité des pixels de l'image, distincte de la texture. En pratique, la texture correspond à des variations d'intensité des pixels de l'image à courte portée (c'est-à-dire à haute fréquence), alors que la tendance correspond à des variations d'intensité des pixels de l'image à longue portée (c'est-à-dire à faible fréquence). Généralement, la tendance est causée par des conditions particulières d'exposition de l'appareil qui enregistre l'image. Par exemple, un appareil d'imagerie médicale à rayons X mal calibré peut engendrer sur l'image la présence d'une tendance, avec généralement une dépendance spatiale de forme polynomiale de degré M égal à un ou deux. Cette tendance cause ainsi une anisotropie sur l'image, mais qui n'est pas liée à une anisotropie de la texture de l'objet sous-jacent qui figure sur l'image. Il n'est par conséquent pas souhaitable de prendre en compte l'anisotropie provenant de cette tendance lorsque l'on cherche à déterminer l'anisotropie de la texture de l'image. C'est uniquement l'anisotropie de la texture de l'image et donc de l'objet sous-jacent qui présente un intérêt. Ainsi, grâce à cette façon de calculer les incréments $V_{j,k}$, l'anisotropie est déterminée avec une meilleure fiabilité.

Les modes de réalisation de l'invention peuvent présenter une ou plusieurs des caractéristiques des revendications dépendantes.

Ces modes de réalisation présentent en outre les avantages suivants :

- la forme particulière des rotations $T_{j,k}$ est simple, ce qui en facilite la mise en œuvre et permet un calcul plus rapide ;
- le test statistique de Fisher permet de tester l'égalité des termes $\beta_j$ efficacement et de façon simplifiée.

Selon un autre aspect, l'invention concerne également un procédé de classement automatique d'images numériques en fonction de l'anisotropie de leur texture, conforme à la revendication 7.

Selon un autre aspect, l'invention concerne également un support d'enregistrement d'informations, caractérisé en ce qu'il comporte des instructions pour la réalisation d'un procédé conforme à l'invention.

Selon un autre aspect, l'invention concerne également un calculateur électronique pour la mise en œuvre du procédé revendiqué.

L'invention sera mieux comprise à la lecture de la description qui va suivre, donnée uniquement à titre d'exemple non limitatif et faite en se référant aux dessins sur lesquels :

- les figures 1A à 1D sont des illustrations schématiques d'images numériques présentant différentes propriétés d'isotropie ou d'anisotropie ;
- la figure 2 est une illustration schématique d'un dispositif de calcul pour caractériser l'anisotropie d'une image numérique des figures 1A à 1D ;
- la figure 3 est un ordinogramme d'un procédé de caractérisation de l'anisotropie de la texture d'une image numérique ;
- la figure 4 est un ordinogramme d'un procédé de classement automatique d'images en fonction de l'anisotropie de leur texture.

Dans ces figures, les mêmes références sont utilisées pour désigner les mêmes éléments.

Dans la suite de cette description, les caractéristiques et fonctions bien connues de l'homme du métier ne sont pas décrites en détails.

Dans cette description, les conventions de notations mathématiques suivantes sont adoptées, sauf mentions contraires :

- l'intervalle [X,Y] désigne l'intervalle de tous les nombres entiers supérieurs ou égaux à X et inférieurs ou égaux à Y, où X et Y sont eux-mêmes des entiers ;
- un vecteur A dans un espace à d dimensions (tel que $\mathbb{N}^d$) a pour coordonnées $A_1$, $A_2$, ..., $A_d$ ;
- $[0, X]^d$ désigne le produit $[0,X_1]x[0,X_2]x...x[0,X_d]$ où X est un vecteur de $\mathbb{N}^d$ de coordonnées $X_1$, $X_2$, ..., $X_d$, de telle sorte que la i-ième coordonnée $U_i$ d'un vecteur U de $[0, X]^d$ appartient à l'intervalle $[0,X_i]$, où i est un indice supérieur ou égal à 0 et inférieur ou égal à d ;
- $|X|$ est la somme des composantes du vecteur X, telle que $|X| = X_1 + X_2 + ... + X_d$.

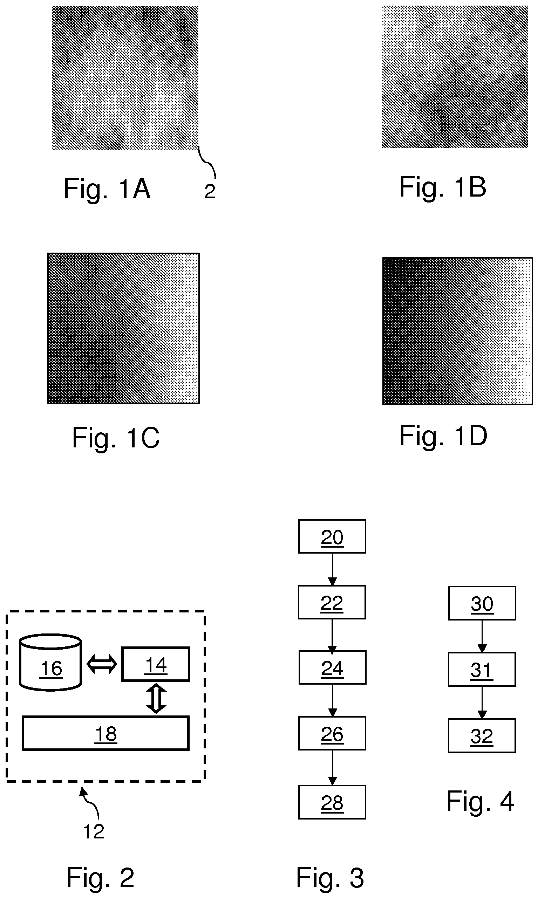

La figure 1A représente une image numérique 2 dont la texture présente une an isotropie.

Dans cette description, l'anisotropie s'entend comme étant le fait que les propriétés de la texture de l'image ne sont pas les mêmes selon la direction dans laquelle elles sont observées.

La texture d'une image numérique est généralement définie comme se rapportant à la distribution spatiale de variations d'intensité et/ou de variations tonales des pixels formant l'image numérique. La texture est une manifestation de la régularité holdérienne de l'image. Cette notion de texture est par exemple définie :

- dans l'ouvrage « Handbook of Texture Analysis », M. Mirmehdi et al., eds., World Scientific, oct. 2008 au chapitre « Introduction to Texture Analysis » de E.R. Davies, ou encore :
- à la section « I. Introduction » de l'article de Robert M. Haralick et al ; « Textural features for image classification » ; IEEE Transactions on Systems, Man and Cybernetics ; vol. SMC-3, n°6, p. 610-621, novembre 1973.

L'anisotropie d'une image peut provenir de deux facteurs : la texture et la « tendance ». Typiquement, la texture correspond aux variations d'intensité des pixels à courte portée (c'est-à-dire à haute fréquence) alors que la tendance se rapporte à des variations d'intensité des pixels à plus longue portée (c'est-à-dire à basse fréquence).

Ici, c'est la texture, et surtout son anisotropie, qui présentent un intérêt pour caractériser l'image 2. Par exemple, lorsque l'image 2 représente un tissu biologique, le caractère anisotrope de la texture de l'image peut donner un indice sur la présence ou le risque de développement de cellules cancéreuses au sein de ce tissu. Dans cet exemple, l'image 2 est un cliché de mammographie.

Les figures 1B à 1D illustrent d'autres exemples d'images susceptibles de correspondre à un cliché de mammographie. La figure 1B représente une image dont la texture est isotrope. Les figures 1C et 1D représentent, respectivement, des images dont la texture est isotrope et anisotrope et qui comportent chacune une anisotropie causée par une tendance polynomiale d'ordre deux. Cette tendance est orientée suivant la direction horizontale de ces images.

L'image 2 est formée d'une pluralité de pixels. Chaque pixel est associé à :

- une valeur d'intensité de pixel, et à
- une position dans l'espace $\mathbb{Z}^d$.

où d est un entier naturel supérieur ou égal à deux qui représente la dimension de l'image 2. Ici, dans cet exemple, d = 2.

Ainsi, les pixels de l'image 2 sont disposés dans l'espace à la manière d'une matrice (« lattice » en langue anglaise) dans l'espace $\mathbb{Z}^d$. De préférence, la résolution de l'image est la même selon tous les d axes de l'image. Par la suite, l'ensemble des positions possibles des pixels de l'image 2 est noté [0, N]$^d$, où N est un vecteur qui code la taille de l'image et dont les composantes sont des entiers naturels strictement positifs appartenant à $\mathbb{N}^d$. Cette notation signifie que les coordonnées $n_1$, $n_2$, ..., $n_d$ de la position n d'un pixel de l'image appartiennent, respectivement, aux ensemble [0,$N_1$], [0, $N_2$], ..., [0, $N_d$], où $N_1$, $N_2$, ... , $N_d$ sont les coordonnées de N. Ici, l'image 2 présente une forme carrée de dimension ($N_1$+1)*($N_2$+1), où $N_1$+1 = $N_2$+1 et $N_1$+1 est la longueur d'un côté de ce carré exprimé en nombre de pixel. Par exemple, l'image 2 est une zone d'intérêt extraite à partir d'une image de dimension plus étendue. Les côtés de l'image 2 présentent une longueur supérieure ou égale à 50 pixels ou à 100 pixels ou à 500 pixels.

Dans cet exemple, l'intensité lumineuse des pixels est encodée en niveaux de gris, par exemple, sur 8 bits. Les valeurs d'intensité de pixel sont des nombres entiers appartenant à l'intervalle [0,255].

La figure 2 décrit un dispositif 12 pour identifier et caractériser l'anisotropie de la texture de l'image 2. Le dispositif 12 est apte, pour une image 2 donnée, à indiquer si l'image est isotrope ou anisotrope et, avantageusement, dans ce dernier cas, à quantifier, c'est-à-dire caractériser, l'ampleur de l'anisotropie.

Le dispositif 12 comporte à cet effet :

- un calculateur 14 électronique programmable,
- un support 16 d'enregistrement d'informations,
- une interface 18 d'acquisition d'une image numérique.

L'interface 18 permet l'acquisition de l'image 2. Typiquement, l'image numérique est générée par un appareil électronique de prise d'images comme un appareil de radiographie. Le calculateur 14 exécute les instructions enregistrées dans le support 16. Le support 16 comporte notamment des instructions pour mettre en œuvre le procédé des figures 3 et 4 qui sera décrit plus en détail dans ce qui suit.

L'identification et la caractérisation de l'anisotropie de l'image 2 se fait à l'aide d'un certain nombre d'opérations.

Dans cet exemple, l'image 2 est modélisée comme étant la réalisation statistique d'un champ gaussien aléatoire intrinsèque (« Intrisic random gaussian field » en langue anglaise). Autrement dit, la valeur d'intensité associée à chaque pixel de l'image 2 est dite correspondre à la réalisation d'une variable aléatoire gaussienne Z. La notion de champ gaussien aléatoire intrinsèque est définie plus en détail dans l'ouvrage suivant : J. P. Chilès et al. « Geostatistics : Modeling Spatial Uncertainty », J. Wiley, 2e édition, 2012.

On note Z[p] la valeur d'intensité associée au pixel dont la position dans l'image 2 est donnée par le vecteur p. Par exemple, on définit un repère orthonormé dans $\mathbb{Z}^d$ ayant pour origine le vecteur nul (0)$^d$.

Un exemple de mise en œuvre du procédé automatique de caractérisation de l'anisotropie de la texture va maintenant être décrite en référence à l'ordinogramme de la figure 3 est à l'aide des figures 1 et 2.

Lors d'une étape 20, l'image 2 est automatiquement acquise par l'interface 18 et enregistrée, par exemple, dans le support 16. On désignera par la suite cette image 2 par la notation « I ».

Dans cet exemple, en dimension d = 2, l'image 2 normalisée est modélisée par une matrice carrée $\underline{Z}$ de dimensions ($N_1$+1)*($N_2$+1). Les coefficients de cette matrice $\underline{Z}$ sont les Z[p] correspondant à l'intensité des pixels de position p. Les composantes du vecteur p donnent la position de ce coefficient dans la matrice $\underline{Z}$. Par exemple, Z[p] est le coefficient de la $p_1$-ième ligne et de la $p_2$-ième colonne de $\underline{Z}$, où $p_1$ et $p_2$ sont les coordonnées de la position p dans [0, N]$^2$.

Puis, lors d'une étape 22, des transformations géométriques de l'image 2 sont appliquées pour obtenir une série d'images transformées $I_{j,k}$. Ces transformations comportent des modifications $T_{j,k}$, de l'image 2 qui incluent chacune :

- une rotation d'un angle $\alpha_j$, et
- un changement d'échelle (« scaling » en langue anglaise) d'un facteur d'échelle $y_k$.

Par la suite, on note $T_{j,k}(I)$ l'image obtenue après l'application de la modification $T_{j,k}$ à l'image I acquise.

Chaque modification $T_{j,k}$ est caractérisée de façon unique par un vecteur $u_{jk}$ de l'espace $\mathbb{Z}^2 \backslash \{(0,0)\}$, de telle sorte que $\alpha_j$ = arg($u_{jk}$) et $y_k$ = |$u_{jk}$|$^2$. L'espace $\mathbb{Z}^2 \backslash \{(0,0)\}$ est l'espace $\mathbb{Z}^2$ privé du point de coordonnées (0,0).

Les indices « j » et « k » sont des indices entiers qui identifient respectivement et de façon unique l'angle $\alpha_j$ est le facteur $y_k$. Pour simplifier la notation, on parlera dans ce qui suit de «rotation j» et de «changement d'échelle k» en référence, respectivement, à la rotation d'angle $\alpha_j$ et au changement d'échelle de facteur $y_k$.

La rotation j fait tourner de l'angle $\alpha_j$ chacun des pixels de l'image 2 depuis une position de départ vers une position d'arrivée autour d'un même point ou d'un même axe prédéterminé. Typiquement ce point ou cet axe de rotation passe par le centre géométrique de l'image. La rotation s'effectue ici par rapport au centre géométrique de l'image. Le centre géométrique d'une image numérique est défini comme étant le barycentre des positions de l'ensemble des pixels de l'image, pondéré chacune par un coefficient de même valeur.

Le changement d'échelle k agrandit ou réduit l'image par une homothétie de facteur $y_k$. Dans les exemples qui suivent, le centre de l'homothétie est le centre géométrique de l'image.

Ces modifications $T_{j,k}$ sont appliquées pour au moins deux et, de préférence au moins trois ou quatre angles $\alpha_j$ de valeurs différentes. Avantageusement, les différentes valeurs des angles $\alpha_j$ sont réparties le plus uniformément possible entre 0° et 180° tout en respectant la contrainte que le vecteur $u_{jk}$ doit appartenir à l'espace $\mathbb{Z}^2 \backslash \{(0,0)\}$. Le nombre de valeurs différentes pour l'angle $\alpha_j$ est généralement choisi pas trop grand pour limiter le nombre de calcul à réaliser. Par exemple, ce nombre est choisi inférieur à vingt ou dix. Un bon compromis consiste à choisir quatre valeurs différentes pour l'angle $\alpha_j$. Pour chaque angle $\alpha_j$, des modifications $T_{j,k}$ sont appliquées pour au moins deux et, de préférence au moins trois ou quatre ou cinq, changements d'échelle $y_k$ différents.

Les valeurs du facteur $y_k$ sont par exemple supérieures ou égales à 1 et inférieures ou égales à $10^2$ ou à $8^2$ ou à $4^2$. De préférence, les différentes valeurs du facteur $y_k$ sont réparties de façon aussi uniforme que possible sur l'intervalle de valeurs choisi.

Par exemple, les angles $\alpha_j$ de rotation sont choisis en fonction des directions horizontales et verticales de l'image 2. Par exemple, pour faire deux rotations j1 et j2, on choisit des valeurs $\alpha_{j1} = 90°$ et $\alpha_{j2} = 180°$, où j1 et j2 sont des valeurs particulières de l'indice j. Les angles sont ici exprimés par rapport à l'axe horizontal de l'image 2.

Dans cet exemple, en dimension d = 2, les modifications $T_{j,k}$ appliquées sont les suivantes, exprimées ici sous forme matricielle :

$$T_{j,k} = \gamma_k \begin{pmatrix} \cos(\alpha_j) & -\sin(\alpha_j) \\ \sin(\alpha_j) & \cos(\alpha_j) \end{pmatrix}$$

Lors de l'étape 22, on calcule des K-incréments pour chacune des images transformées $T_{j,k}(I)$. Ce calcul comporte un filtrage destiné à éliminer les tendances de forme polynomiale d'ordre strictement inférieur à K. Plus précisément, pour chaque image $T_{j,k}(I)$, on applique un filtre permettant de calculer le K-incrément $V_{j,k}$ de cette image $T_{j,k}(I)$. C'est le K-incrément de cette image $T_{j,k}(I)$ qui constitue l'image transformée $I_{j,k}$. Le K-incrément $V_{j,k}$ de cette image n'est pas calculé pour tous les points de l'image $T_{j,k}(I)$, mais seulement pour certains d'entre eux, comme on le verra plus loin.

La notion de K-increment est par exemple définie plus en détails dans l'ouvrage suivant : J. P. Chilès et al. « Geostatistics : Modeling Spatial Uncertainty », J. Wiley, 2e édition, 2012.

Ici, le filtrage est réalisé au moyen d'un noyau de convolution (« convolution kernel » en langue anglaise) noté « v », pour assurer un filtrage linéaire. Par la suite, on parlera de « filtre v » pour désigner ce noyau de convolution.

Le filtre v est défini sur l'ensemble $[0,L]^d$. Ce filtre v est caractérisé par un polynôme caractéristique $Q_v(z)$ défini par :

$$\forall z \in \mathbb{R}^d, Q_v(z) = \sum_{p \in [0,L]^d} v[p] z^p$$

Ici, le filtre v désigne une matrice et la quantité v[p] désigne une valeur scalaire particulière de ce filtre pour le vecteur p, où p est un vecteur de $[0,L]^d$. Cette valeur v[p] est nulle si le vecteur p n'appartient pas à $[0,L]^d$. De façon équivalente, on dit aussi que le filtre v présente un support borné sur $[0,L]^d$. Ce filtre v est distinct de la fonction nulle qui, pour toute valeur du vecteur p présente une valeur v[p] nulle. La notation $z^p$ désigne ici le monôme $z_1^{p1} * z_2^{p2} * ... * z_d^{pd}$.

Le filtre v est ainsi paramétré par le vecteur L qui est un vecteur de $[0,N]^d$. De façon générale, le vecteur L est choisi de sorte à être contenu dans l'image I. On prend donc de préférence des valeurs de L qui satisfont, pour tout i allant de 1 à d, à la relation $L_i \ll N_i$, c'est-à-dire que $L_i$ est inférieur à 10 fois ou à 100 fois $N_i$.

De surcroît, le filtre v est tel que son polynôme caractéristique $Q_v(z)$ satisfait la condition suivante :

$$\frac{\partial^{|a|}Q_v}{\partial z_1^{a_1}...\partial z_d^{a_d}}(1,...,1)=0$$

$$\forall a \in [0,K]^d \quad \text{tel que} \quad |a| \leq K \quad \text{alors}$$

où la constante K est un entier naturel non nul et $\partial^{|a|}Q_v/\partial z_1^{a_1}...\partial z_d^{a_d}$ est la dérivée partielle du polynôme $Q_v(z)$ par rapport aux composantes du vecteur z, le symbole $\partial z_i^{a_i}$ indiquant une différentiation du polynôme $Q_v(z)$ d'ordre $a_i$ par rapport à la variable $z_i$, où $z_i$ désigne la i-ième composante du vecteur z et $a_i$ la i-ième composante du vecteur a, i étant un indice entier supérieur ou égal à 0 et inférieur ou égal à d.

Le filtrage de l'image $T_{j,k}(I)$ par le filtre v permet d'éliminer l'effet de la « tendance » sur les calculs ultérieurs du procédé lorsque celle-ci présente une forme polynomiale d'ordre M, à condition que la valeur de la constante K soit choisie comme suit :

- K ≥ M + 1 si d est inférieur ou égal à 4, et
- K ≥ M/2 + d/4 si d > 4.

Les K-incréments de l'image $T_{j,k}(I)$, notés $V_{j,k}$, sont alors calculés grâce au filtre v comme suit :

$$V_{j,k}[m] = \sum_{p \in [0,L]^d} v[p] \cdot Z[m - T_{j,k} \cdot p]$$

où :

- $V_{j,k}[m]$ est un K-incrément calculé sur l'image $T_{j,k}(I)$ pour le pixel de position m, avec m un vecteur appartenant à un ensemble E qui sera défini dans ce qui suit ;
- le produit $T_{j,k} \cdot p$ correspond à l'application de la modification $T_{j,k}$ sur le pixel p de l'image I et exprime les coordonnées dans $\mathbb{Z}^d$, après application de la modification $T_{j,k}$, du pixel qui avait initialement la position p dans l'image I,
- v[p] est la valeur du filtre v pour la valeur de p.

Pour chaque image $T_{j,k}(I)$, le calcul du K-incrément est réalisé uniquement sur les pixels de l'image $T_{j,k}(I)$ dont les positions appartiennent à un ensemble E. L'ensemble E contient seulement des positions :

- qui appartiennent à l'image I, et
- qui, quelle que soit la modification $T_{j,k}$ appliquée, occupent une position qui existe déjà dans l'image I après application de cette modification $T_{j,k}$.

En outre, pour toute position m appartenant à E, les pixels de position « m - $T_{j,k} \cdot p$ » occupent une position contenue dans l'image I.

On note $n_E$ le nombre des positions qui appartiennent à l'ensemble E.

Ainsi, le calcul des variations quadratiques est réalisé uniquement sur les points de l'image transformée pour lequel aucune interpolation n'est nécessaire. On peut ainsi avoir recours à des rotations j suivant n'importe quel angle, au contraire de ce qui se passe avec les projections. En effet, si une projection est réalisée suivant une direction par exemple diagonale de l'image, des points projetés ont une position qui n'appartient pas à l'ensemble $[0,N]^d$. Autrement dit, ils ne font plus partie de la matrice. Il faut donc avoir recours à une interpolation pour déterminer la valeur d'intensité associée à des points qui eux appartiennent à cette matrice. Cela introduit une approximation et donc une erreur. Avec les modifications $T_{j,k}$ puis la sélection des points de l'ensemble E, la fiabilité du procédé est améliorée.

Dans cet exemple, le filtrage est effectué au sein de la même formule que l'application des modifications $T_{j,k}$.

Avec ce choix de la constante K, le filtrage produit les incréments $V_{j,k}[m]$ d'ordre K. Ce filtrage permet de ne pas tenir compte d'une anisotropie de l'image qui serait causée par la tendance, mais seulement de l'anisotropie de la texture de l'image sous-jacente, en l'occurrence ici du tissu mammaire. Il en résulte une meilleure fiabilité du procédé de caractérisation.

La constante K doit donc être choisie comme décrit précédemment en fonction de la nature de la tendance présente dans l'image 2. Typiquement, dans le cas d'un cliché de mammographie, le degré polynomial M de la tendance est inférieur ou égal à deux. Par exemple, une valeur est sélectionnée par un utilisateur du procédé. À cet effet, l'étape 22 comporte ici l'acquisition d'une valeur du vecteur L ainsi que d'une valeur de la constante K.

Dans cet exemple, le filtre v est choisi comme suit :

$$v[p] = (-1)^{|p|} \times C_{L_1}^{p_1} \times \ldots \times C_{L_d}^{p_d} = (-1)^{|p|} \times \prod_{i=1}^{d} \frac{L_i!}{p_i! \times (L_i - p_i)!}$$

si le vecteur p appartient à $[0,L]^d$ et v[p] = 0 sinon, où les termes $C_L^p$ désignent des coefficients binomiaux.

Avec ce filtre particulier, la condition précédemment exprimée sur le polynôme caractéristique $Q_v(z)$ est satisfaite si K = |L| - 1. Aussi, la valeur de K se déduit de la valeur du paramètre L qui a été acquise.

Alors, dans ce cas particulier, le filtrage de l'image $T_{j,k}(I)$ par le filtre v permet d'éliminer l'effet de la « tendance » lorsque celle-ci présente une forme polynomiale d'ordre M, à condition que le paramètre L soit choisit comme suit :

- |L| = M + 2 si d inférieur ou égal à 4, et
-

$$|L| = M/2 + d/4 + 1$$

si d > 4.

Dans cet exemple, en dimension d = 2, le vecteur L a deux composantes, $L_1$ et $L_2$. Pour éliminer une tendance d'ordre M=2, il faut choisir $L_1$ et $L_2$ tels que |L| soit égal à quatre. On choisit de préférence $L_1$=4 et $L_2$=0. En effet, en choisissant des valeurs pour les coordonnées du vecteur « L » suffisamment éloignées les unes des autres, le filtre présente une plus grande sensibilité directionnelle. Ainsi, il réagira de façon plus marquée, donc filtrera plus efficacement, des variations qui sont orientées selon une direction particulière. Au contraire, un filtre pour lequel on choisirait $L_1$=2 et L2=2 serait moins sensible à un signal directionnel et présenterait une efficacité moindre.

Ici, lors de cette étape 22, pour chaque valeur différente de j et k, le calculateur 14 réalise successivement les opérations suivantes :

- application de la modification $T_{j,k}$ à l'image 2 pour obtenir l'image $T_{j,k}(I)$, puis
- application du filtre v à l'image $T_{j,k}(I)$ pour obtenir l'image transformée $I_{j,k}$.

Ensuite, lors d'une étape 24, pour chaque image $I_{j,k}$, on calcule la p-variation $W_{j,k}$ associée à cette image $I_{j,k}$. La notion de p-variations est bien connue de l'homme du métier dans le domaine des statistiques et des probabilités. Ici, elle est calculée de la façon suivante :

$$W_{j,k}[m] = \frac{1}{n_E} \sum_{m \in E} (V_{j,k}[m])^q$$

Dans l'équation ci-dessus, on a utilisé le symbole « q » à la place du symbole « p », classiquement utilisé dans cette équation, pour éviter toute confusion avec le symbole « p » utilisé dans cette description pour désigner la position d'un pixel. Dans cet exemple, on utilise une forme particulière des p-variations : les « variations quadratiques » ou « 2-variations », pour lesquelles q=2. Ainsi, on calcule la variation quadratique $W_{j,k}$ de l'image $I_{j,k}$ de la façon suivante, à partir des K-incréments calculés après filtrage lors de l'étape 22 :

$$W_{j,k}[m] = \frac{1}{n_E} \sum_{m=E} (V_{j,k}[m])^2$$

Ces variations quadratiques $W_{j,k}$ contiennent des informations importantes pour l'identification de l'anisotropie. Pour extraire ces informations, on procède comme suit.

Lors d'une étape 26, une analyse de covariance comportant une régression statistique est effectuée sur toutes les variations $W_{j,k}$ calculées pour chacune des images $I_{j,k}$ afin d'interpoler :

- la valeur de l'exposant de Hurst H de l'image I et,
- un terme $\beta_j$.

La régression statistique est définie par la relation suivante :

$$\log(|W_{j,k}|) = \log(|u_{jk}|^2)*H + \beta_j + \varepsilon_{j,k} \, ,$$

où :

- H est l'exposant de Hurst de l'image I ;
- $\beta_j$ est une quantité qui ne dépend pas du changement d'échelle k ; ici ce paramètre est analogue à un paramètre dit d'intercept de la régression, sauf qu'il dépend des rotations j.
- $\varepsilon_{j,k}$ est un terme d'erreur de la régression dont les propriétés statistiques sont prédéterminées et fixées par l'utilisateur. Par exemple, les termes d'erreur $\varepsilon_{j,k}$ sont des variables aléatoires gaussiennes corrélées entre elles.

On rappelle que l'exposant de Hurst H est une grandeur physique indépendante des rotations de l'image.

On obtient ainsi un nombre $n_j$ de termes $\beta_j$, $n_j$ étant le nombre de rotations différentes appliquées à l'image I.

Par exemple, si l'on s'est contenté de faire les deux rotations j1 et j2 précédemment décrites, on effectue la régression sur la base de toutes les variations quadratiques calculées pour j1 et pour j2. On obtient ainsi deux termes, $\beta_{j1}$ et $\beta_{j2}$.

Ici, cette analyse comporte l'estimation de la covariance des variations quadratiques, par exemple par une méthode standard applicable aux champs stationnaires. L'estimation des paramètres est réalisée avec un critère des moindres carrés généralisés. Une telle méthode est par exemple décrite dans l'article suivant : P. Hall et al ., « Properties of nonparametric estimators of autocovariance for stationary random fields », Probability Theory and Related Fields, vol. 99:3, p. 399-424, 1994.

À ce state, l'anisotropie est détectée en testant l'égalité entre eux des termes $\beta_j$, à une marge d'erreur prédéterminée près.

En effet, chacun des termes $\beta_j$ encapsule des informations relatives à la texture suivant la direction propre à la rotation j. Si tous les termes $\beta_j$ sont égaux entre eux, c'est que la texture ne dépend pas de l'orientation et donc qu'elle est isotrope. Dans le cas contraire, si les termes $\beta_j$ ne sont pas égaux entre eux, alors la texture présente une anisotropie.

À cet effet, lors d'une étape 28, on teste l'égalité des termes $\beta_j$ entre eux, à une valeur prédéfinie près. L'image 2 est identifiée comme étant isotrope si une telle égalité est trouvée. Dans le cas contraire, elle est identifiée comme étant anisotrope.

Ce test est ici réalisé au moyen d'un test statistique de Fisher pour tester la validité de l'hypothèse nulle suivante : « $\forall \, j \in [1, n_j]$, $\beta_j = \beta$ », où $\beta$ est un terme qui ne dépend pas des rotations j ni des changements d'échelle k. Cette hypothèse nulle est testée contre l'hypothèse alternative « $\exists \, j_1, j_2$ tels que $\beta_{j1} \neq \beta_{j2}$ ».

La marge d'erreur prédéterminée est ici fixée par un intervalle de confiance de 95 % ou 99 %.

Avantageusement, la valeur-p du test de Fisher est collectée. Lorsque l'image est anisotrope, elle fournit ainsi une signature numérique renseignant sur le degré d'anisotropie de l'image, c'est-à-dire elle permet de quantifier si l'image est peu anisotrope ou très anisotrope. Cela permet de classer l'image 2 par rapport à une valeur d'anisotropie de référence ou bien par rapport à d'autres images. Ici, la valeur-p du test est enregistrée automatiquement.

L'ordinogramme de la figure 4 décrit une application du procédé pour classer automatiquement des images 2 les unes par rapport aux autres en fonction de leur anisotropie.

Ainsi, lors d'une étape 30, une pluralité d'images 2 sont automatiquement acquises. Lors d'une étape 31, pour chacune d'entre elles, une signature numérique caractéristique de l'ampleur de son anisotropie et calculée automatiquement au moyen des étapes 20 à 28 précédemment décrites. Cette signature est ici la p-valeur retournée par le test de Fisher à l'issue de l'étape 28. Typiquement, la p-valeur du test est comprise entre zéro et un. La valeur « un » représente l'ordre d'anisotropie le plus bas et « zéro » l'ordre le plus élevé d'anisotropie.

Lors d'une étape 32, les images acquises sont classées automatiquement les unes par rapport aux autres en fonction de leur anisotropie au moyen des signatures calculées lors de l'étape 31. Par exemple, les images sont classées par ordre d'anisotropie croissante.

Cette classification est par exemple réalisée au moyen d'un classificateur (« classifier » en langue anglaise) tel qu'un algorithme de classement à base de réseaux de neurones ou une machine à vecteurs de support (« support vector machine » en langue anglaise).

De nombreux autres modes de réalisation sont possibles.

Les pixels de l'image 2 peuvent présenter d'autres valeurs d'intensités. La valeur d'intensité de chaque pixel peut être une valeur réelle. Ou bien elle peut être supérieure à 256. Par exemple, l'image 2 est encodée en couleurs.

Dans ce cas, l'image en couleurs est séparée en une pluralité d'images monochromes correspondant chacune à des canaux colorimétriques qui composent l'image en couleurs. Le procédé est alors appliqué séparément pour chacune de ces images monochromes.

L'image 2 peut présenter une forme non carrée.

Par exemple, en dimension d = 2, l'image présente une forme rectangulaire ou même trapézoïdale. Lorsque l'image ne présente pas une forme régulière, les notions de direction « horizontale » et « verticale » sont remplacées par des directions de références adaptées à la géométrie de l'image. Par exemple, dans le cas d'une image de forme triangulaire, on prendra comme référence la base et la hauteur du triangle.

Pour une dimension d d'ordre supérieur à deux, l'image 2 peut être un hypercube de dimension d.

L'image 2 peut être autre chose qu'un cliché de mammographie. Par exemple, il peut s'agir d'un cliché d'un tissu osseux. L'anisotropie de la texture de l'image renseigne alors sur la présence de pathologies osseuses, comme l'ostéoporose.

D'autres domaines d'application plus larges peuvent être envisagés, comme d'autres types de tissus biologiques, des images aériennes ou satellitaires, des images géologiques, ou des clichés de matériaux. De façon générale, la méthode s'applique à n'importe quel type d'image irrégulière et texturée tel qu'une image obtenue à partir d'un appareil électronique quelconque de prise d'images.

D'autres modifications peuvent être utilisées. Par exemple, en dimension d = 3, les modifications $T_{j,k}$ réalisent une rotation j autour d'un axe de rotation donné et un changement d'échelle k selon une direction donnée de l'image. Par exemple, les modifications suivantes peuvent être utilisées :

$$T_{j,k} = \begin{pmatrix} \cos(\alpha_j) & -\sin(\alpha_j) & 0 \\ \sin(\alpha_j) & \cos(\alpha_j) & 0 \\ 0 & 0 & \gamma_k \end{pmatrix}, ou \begin{pmatrix} \cos(\alpha_j) & 0 & -\sin(\alpha_j) \\ 0 & \gamma_k & 0 \\ \sin(\alpha_j) & 0 & \cos(\alpha_j) \end{pmatrix}, ou \begin{pmatrix} \gamma_k & 0 & 0 \\ 0 & \cos(\alpha_j) & -\sin(\alpha_j) \\ 0 & \sin(\alpha_j) & \cos(\alpha_j) \end{pmatrix}.$$

Les modifications $T_{j,k}$ ci-dessus réalisent une rotation autour d'un axe et un changement d'échelle dans une direction non-parallèle à cet axe.

Les valeurs de l'angle $\alpha_j$ peuvent être différentes. De préférence, on choisit des valeurs de l'angle $\alpha_j$ qui ne nécessitent pas d'interpolations.

Les valeurs du facteur $y_k$ peuvent être différentes.

En variante, la rotation et le changement d'échelle ne sont pas appliqués en même temps.

D'autres filtres v peuvent être utilisés pour calculer les K-incréments. Par exemple, pour calculer les K-incréments on peut également utiliser tout filtre dont le noyau de convolution est défini comme étant égal au produit de convolution :

- d'un noyau v1 de convolution quelconque, et
- d'un noyau v2 de convolution égal au noyau v précédemment décrit.

Dans le cas particulier où le noyau v1 est une matrice identité, on retrouve le filtre v précédemment décrit. A l'inverse, choisir un noyau v1 différent de la matrice identité permet de construire un grand nombre de filtres différents des filtres v précédemment décrits mais qui conviennent tous pour calculer les K-incréments.

Le filtrage peut être implémenté différemment lors de l'étape 22. En particulier, la transformation et le filtrage ne sont pas forcément appliqués simultanément, mais dans des formules séparées.

En variante, toutes les transformations $T_{j,k}$ sont d'abord appliquées sur l'image I, puis, dans un second temps, les filtres sont appliqués sur chacune des images $T_{j,k}(I)$.

La valeur de K peut être différente. En particulier, avec le filtre v choisi dans l'exemple, lorsque l'image I ne présente pas de tendance, c'est-à-dire que M = 0, alors on prendra préférentiellement |L| = 2 ou, si d>4, |L| = 1+d/4.

En variante, plusieurs filtres $v_i$ sont appliqués sur chaque image $T_{j,k}(I)$ lors de l'étape 22. On note ni le nombre de filtres $v_i$ différents appliqués sur une image donnée $T_{j,k}(I)$. Dans ce cas, on note $I_{i,j,k}$ l'image transformée obtenue en appliquant le filtre $v_i$ sur l'image $T_{j,k}(I)$ et $V_{i,j,k}[m]$ le K-incrément de cette image à la position m dans cette image, où « i » est un indice qui identifie de façon unique le filtre $v_i$ appliqué. Cet indice « i » est ici distinct de l'indice « i » utilisé précédemment comme variable muette notamment en référence à la dérivée partielle du polynôme $Q_v(z)$. De fait, on peut alors calculer plusieurs variations quadratiques pour chaque image $T_{j,k}(I)$, une pour chaque filtre $v_i$ appliqué à cette image $T_{j,k}(I)$. On note ainsi $W_{i,j,k}$ la variation quadratique calculée pour l'image $I_{i,j,k}$.

À cet effet, l'étape 22 comporte une opération de sélection des filtres $v_i$, par exemple parmi une bibliothèque de filtres prédéfinie.

Les variations quadratiques $W_{i,j,k}$ sont alors calculées lors de l'étape 24 a l'aide de la relation suivante :

$$W_{i,j,k}[m] = \frac{1}{n_E} \sum_{m=E} (V_{i,j,k}[m])^2$$

Lors de l'étape 26, la régression est alors effectuée de la manière suivante en tenant compte des ni filtres appliqués : $\log(|W_{i,j,k}|) = \log(|u_{jk}|^2){*}H + \beta_{i,j} + \varepsilon_{i,j,k}$, où :

- $\beta_{i,j}$ est le terme $\beta_j$ associé au filtre $v_i$ ;
- $\varepsilon_{i,j,k}$ est le terme d'erreur $\varepsilon_{j,k}$ associé au filtre $v_i$.

On obtient ainsi un nombre nb de termes $\beta_{i,j}$, où $n_b = n_j{*}n_i$, $n_j$ étant le nombre de rotations différentes appliquées à l'image I. Lors de l'étape 28, l'hypothèse nulle du test de Fisher est formulée de la façon suivante : « $\forall\ j \in [1, n_j]$, $\beta_{i,j} = \beta_i$ », où $\beta_i$ est un terme qui ne dépend pas des rotations j ni des changements d'échelle k, mais qui dépend des filtres $v_i$ utilisés.

Lorsque plusieurs filtres $v_i$ sont utilisés, le nombre de filtres $v_i$ appliqués peut varier d'une image $T_{j,k}(I)$ à l'autre, à condition toutefois qu'à un filtre i correspondent au moins deux rotations j et, pour chacune de ces rotations j, au moins deux changements d'échelle k.

En variante, l'étape 28 est réalisée différemment. Le test de Fisher peut être implémenté de manière différente, par exemple en choisissant un estimateur différent ou avec d'autres intervalles de confiance.

En variante, d'autres façons de tester l'égalité des termes sont utilisées lors de l'étape 28. Par exemple, on teste si tous les termes $\beta_j$ sont égaux entre eux, à 2 % près ou à 5 % près. Si tel est le cas, alors la texture est dite être isotrope. Sinon, elle est dite être anisotrope. Ce test n'est alors pas véritablement un test statistique mais plutôt un test d'égalité stricte.

Selon un autre exemple, le test d'égalité est réalisé en effectuant un test d'inégalité entre les termes $\beta_j$ au moyen d'un test statistique de Student. Par exemple, on compare tous les termes $\beta_j$ deux à deux pour déterminer s'il existe j1, j2 tels que $\beta_{j1} > \beta_{j2}$.

La classification peut être réalisée différemment lors de l'étape 32. Par exemple, l'ordre de classement des images peut être choisi différemment.

## Revendications

**1.** Procédé d'identification de l'anisotropie de la texture d'une image numérique, comportant :

a) l'acquisition d'une image numérique (2) formée de pixels, chaque pixel étant associé à une intensité lumineuse et à une position dans l'espace $\mathbb{Z}^d$, où d est un entier naturel supérieur ou égal à deux ;

et **caractérisé en ce qu'**il comporte également :

b) la transformation automatique de l'image acquise pour obtenir une image transformée $I_{j,k}$, la transformation comportant l'application d'une modification $T_{j,k}$ de l'image qui fait tourner d'un angle $\alpha_j$ chaque pixel de l'image acquise d'une position à une autre autour d'un point ou d'un axe et qui agrandit ou réduit l'image d'un facteur $y_k$, où $\alpha_j = \arg(u_{jk})$ et $y_k = |u_{jk}|^2$, $u_{jk}$ étant un vecteur de $\mathbb{Z}^2 \backslash \{(0,0)\}$ qui caractérise complètement la modification $T_{j,k}$, les indices j et k identifiant respectivement et de façon unique l'angle $\alpha_j$ et le facteur $y_k$, la modification $T_{j,k}$ présentant :

- pour d = 2, la forme matricielle suivante :

$$T_{j,k} = \gamma_k \begin{pmatrix} \cos(\alpha_j) & -\sin(\alpha_j) \\ \sin(\alpha_j) & \cos(\alpha_j) \end{pmatrix}$$

- et, pour d = 3, l'une des formes matricielles suivantes ou une composition de ces formes matricielles :

$$T_{j,k} = \begin{pmatrix} \cos(\alpha_j) & -\sin(\alpha_j) & 0 \\ \sin(\alpha_j) & \cos(\alpha_j) & 0 \\ 0 & 0 & \gamma_k \end{pmatrix}, ou \begin{pmatrix} \cos(\alpha_j) & 0 & -\sin(\alpha_j) \\ 0 & \gamma_k & 0 \\ \sin(\alpha_j) & 0 & \cos(\alpha_j) \end{pmatrix}, ou \begin{pmatrix} \gamma_k & 0 & 0 \\ 0 & \cos(\alpha_j) & -\sin(\alpha_j) \\ 0 & \sin(\alpha_j) & \cos(\alpha_j) \end{pmatrix}.$$

l'image transformée étant obtenue en multipliant les coordonnées de la position de chaque pixel par la matrice $T_{j,k}$,

puis, pour chaque image sur laquelle une modification $T_{j,k}$ a été appliquée, le calcul d'un K-incrément $V_{j,k}[m]$ pour chaque pixel de position m de l'image transformée, ce K-incrément étant calculé par application d'un noyau de convolution v au moyen de la formule suivante :

$$V_{j,k}[m] = \sum_{p \in [0,L]^d} v[p] \cdot Z[m - T_{j,k} \cdot p]$$

où :

- le produit $T_{j,k}.p$ correspond à l'application de la modification $T_{j,k}$ au pixel qui avait initialement la position p dans l'image I ;
- le noyau de convolution v réalise un filtrage linéaire et possédant un polynôme caractéristique $Q_v(z)$ et un support fini $[0,L]^d$, v[p] étant la valeur du noyau v de convolution pour la position p, le polynôme caractéristique $Q_v(z)$ étant défini par la formule suivante :

$$\forall z \in \mathbb{R}^d, Q_v(z) = \sum_{p \in [0,L]^d} v[p] z^p$$

et satisfaisant la condition suivante :

$$\forall a \in [0,K]^d \quad \text{tel que} \quad |a| \leq K \quad \text{alors} \quad \frac{\partial^{|a|} Q_v}{\partial z_1^{a_1} \ldots \partial z_d^{a_d}}(1, \ldots, 1) = 0$$

où :

- L est un vecteur acquis de $[0, N]^d$ qui paramétrise le noyau v,

- N est un vecteur appartenant à $\mathbb{N}^d$ qui code la taille de l'image et dont les composantes sont des entiers naturels strictement positifs ;
- la constante K est un entier naturel non nul acquis;
- z un vecteur de composantes $z_1, z_2, \ldots, z_d$ ;
- $z^p$ désigne le monôme $z_1^{p1} * z_2^{p2} * \ldots * z_d^{pd}$ ;
- $\partial^{|a|} Q_v / \partial z_1^{a1} \ldots \partial z_d^{ad}$ est la dérivée partielle du polynôme $Q_v(z)$ par rapport aux composantes du vecteur z, le symbole $\partial z_i^{ai}$ indiquant une différentiation du polynôme $Q_v(z)$ d'ordre $a_i$ par rapport à la variable $z_i$, où $z_i$ désigne la i-ième composante du vecteur z et $a_i$ la i-ième composante du vecteur a, i étant un indice entier supérieur ou égal à 0 et inférieur ou égal à d ;

le calcul des K-incréments étant réalisé à partir des seuls pixels de l'image qui occupent une position m appartenant à un ensemble E, cet ensemble E comportant seulement des positions m qui existent déjà dans l'image I et qui, quelle que soit la modification $T_{j,k}$, après application de cette modification $T_{j,k}$, occupent une position qui existe aussi déjà dans l'image I et pour lesquels la position « $m-T_{j,k}.p$ » occupe une position qui existe aussi déjà dans l'image I ; l'image transformée $I_{j,k}$ obtenue à l'issue du calcul de ce K-incrément comportant uniquement des pixels dont les positions appartiennent à l'ensemble E,

l'étape b) étant exécutée avec au moins deux angles $\alpha_j$ différents et, pour chaque angle $\alpha_j$, avec au moins deux facteurs $y_k$ différents, de manière à obtenir au moins quatre images transformées $I_{j,k}$ différentes ;

c) pour chaque image transformée $I_{j,k}$ différente, le calcul d'une p-variation $W_{j,k}$ de cette image transformée à partir desdits K-incréments calculés ;

d) l'estimation des termes $\beta_j$ de la régression statistique suivante :

$$\log(|W_{j,k}|) = \log(|u_{jk}|^2)*H + \beta_j + \varepsilon_{j,k} \, ,$$

où :

- H est l'exposant de Hurst de l'image acquise ;
- $\varepsilon_{j,k}$ est un terme d'erreur de la régression dont les propriétés statistiques sont prédéterminées ;

puis, le test de l'égalité des termes $\beta_j$ entre eux à une marge d'erreur prédéterminée près, la texture de l'image étant identifiée comme isotrope si une telle égalité est trouvée à l'issue du test et étant identifiée comme anisotrope sinon.

2. Procédé selon la revendication 1, dans lequel le noyau v utilisé lors de l'étape b) est égal au produit de convolution d'un noyau de convolution quelconque avec le noyau défini de la façon suivante :

$$v[p] = (-1)^{|p|} \times C_{L_1}^{p_1} \times \ldots \times C_{L_d}^{p_d} = (-1)^{|p|} \times \prod_{i=1}^{d} \frac{L_i!}{p_i! \times (L_i - p_i)!}$$

si le vecteur p appartient à $[0,L]^d$ et v[p] = 0 sinon, où les termes $C_L^p$ désignent des coefficients binomiaux, la constante K étant alors égale à K = |L| -1.

3. Procédé selon l'une quelconque des revendications précédentes, dans lequel les p-variations calculées lors de l'étape c) sont des variations quadratiques calculées selon la formule suivante :

$$W_{j,k}[m] = \frac{1}{n_E} \sum_{m \in E} (V_{j,k}[m])^q$$

où q=2 et nE le nombre des positions qui appartiennent à l'ensemble E.

4. Procédé selon l'une quelconque des revendications précédentes, dans lequel l'égalité des termes $\beta_j$ est testée au moyen d'un test statistique de Fisher.

5. Procédé selon la revendication 4, dans lequel l'étape d) comporte le calcul automatique de la valeur-p du test statistique pour quantifier le degré d'anisotropie de l'image.

6. Procédé de classement automatique d'images numériques en fonction de l'anisotropie de leur texture, ce procédé comportant l'acquisition d'une pluralité d'images formée chacune d'une pluralité de pixels ;
**caractérisé en ce qu'**il comporte :

- le calcul automatique, pour chacune des images acquises, de leur degré d'anisotropie respectif au moyen du procédé de la revendication 5 ;
- le classement des images numériques acquises, à l'aide d'un classificateur automatique, en fonction du degré d'anisotropie calculé pour chacune desdites images.

7. Support (16) d'enregistrement d'informations, **caractérisé en ce qu'**il comporte des instructions pour la réalisation d'un procédé conforme à l'une quelconque des revendications précédentes, lorsque ces instructions sont exécutées par un calculateur électronique.

8. Calculateur électronique (14) pour la mise en œuvre de l'une quelconque des revendications 1 à 6, ce calculateur étant programmé pour acquérir automatiquement une image numérique (2) formée de pixels, chaque pixel étant associé à une intensité lumineuse et à une position dans l'espace $\mathbb{Z}^d$, où d est un entier naturel supérieur ou égal à deux ;
ce calculateur électronique étant **caractérisé en ce qu'**il est également programmé pour :

b) transformer automatiquement l'image acquise pour obtenir une image transformée $I_{j,k}$, la transformation comportant l'application d'une modification $T_{j,k}$ de l'image qui fait tourner d'un angle $\alpha_j$ chaque pixel de l'image acquise d'une position à une autre autour d'un point ou d'un axe et qui agrandit ou réduit l'image d'un facteur $y_k$, où $\alpha_j = \arg(u_{jk})$ et $y_k = |u_{jk}|^2$, $u_{jk}$ étant un vecteur de $\mathbb{Z}^2 \backslash \{(0,0)\}$ qui caractérise complètement la modification $T_{j,k}$, les indices j et k identifiant respectivement et de façon unique l'angle $\alpha_j$ et le facteur $y_k$, la modification $T_{j,k}$ présentant :

- pour d = 2, la forme matricielle suivante :

$$T_{j,k} = \gamma_k \begin{pmatrix} \cos(\alpha_j) & -\sin(\alpha_j) \\ \sin(\alpha_j) & \cos(\alpha_j) \end{pmatrix}$$

- et, pour d = 3, l'une des formes matricielles suivantes ou une composition de ces formes matricielles :

$$T_{j,k} = \begin{pmatrix} \cos(\alpha_j) & -\sin(\alpha_j) & 0 \\ \sin(\alpha_j) & \cos(\alpha_j) & 0 \\ 0 & 0 & \gamma_k \end{pmatrix}, ou \begin{pmatrix} \cos(\alpha_j) & 0 & -\sin(\alpha_j) \\ 0 & \gamma_k & 0 \\ \sin(\alpha_j) & 0 & \cos(\alpha_j) \end{pmatrix}, ou \begin{pmatrix} \gamma_k & 0 & 0 \\ 0 & \cos(\alpha_j) & -\sin(\alpha_j) \\ 0 & \sin(\alpha_j) & \cos(\alpha_j) \end{pmatrix}.$$

l'image transformée étant obtenue en multipliant les coordonnées de la position de chaque pixel par la matrice $T_{j,k}$,
puis, pour chaque image sur laquelle une modification $T_{j,k}$ a été appliquée, calculer d'un K-incrément $V_{j,k}[m]$ pour chaque pixel de position m de l'image transformée, ce K-incrément étant calculé par application d'un noyau de convolution v au moyen de la formule suivante : où :

$$V_{j,k}[m] = \sum_{p \in [0,L]^d} v[p] \cdot Z[m - T_{j,k} \cdot p]$$

- le produit $T_{j,k}.p$ correspond à l'application de la modification $T_{j,k}$ du pixel qui avait initialement la position p dans l'image I ;
- le noyau de convolution v réalise un filtrage linéaire et possédant un polynôme caractéristique $Q_v(z)$ et un support fini $[0,L]^d$, $v[p]$ étant la valeur du noyau v de convolution pour la position p, le polynôme caractéristique $Q_v(z)$ étant défini par la formule suivante :

$$\forall z \in \mathbb{R}^d, Q_v(z) = \sum_{p \in [0,L]^d} v[p] z^p$$

et satisfaisant la condition suivante :

$$\forall a \in [0, K]^d \quad \text{tel que} \quad |a| \leq K \quad \text{alors} \quad \frac{\partial^{|a|} Q_v}{\partial z_1^{a_1} ... \partial z_d^{a_d}}(1, .., 1) = 0$$

où :

- L est un vecteur acquis de $[0, N]^d$ qui paramétrise le noyau v,

- N est un vecteur appartenant à $\mathbb{N}^d$ qui code la taille de l'image et dont les composantes sont des entiers naturels strictement positifs ;
- la constante K est un entier naturel non nul aquis;
- z un vecteur de composantes $z_1, z_2, ..., z_d$ ;
- $z^p$ désigne le monôme $z_1^{p1}* z_2^{p2}*...*z_d^{pd}$ ;
- $\partial^{|a|}Q_v/\partial z_1^{a1}...\partial z_d^{ad}$ est la dérivée partielle du polynôme $Q_v(z)$ par rapport aux composantes du vecteur z, le symbole $\partial z_i^{ai}$ indiquant une différentiation du polynôme $Q_v(z)$ d'ordre $a_i$ par rapport à la variable $z_i$, où $z_i$ désigne la i-ième composante du vecteur z et $a_i$ la i-ième composante du vecteur a, i étant un indice entier supérieur ou égal à 0 et inférieur ou égal à d ;

le calcul des K-incréments étant réalisé à partir des seuls pixels de l'image qui occupent une position m appartenant à un ensemble E, cet ensemble E comportant seulement des positions m qui existent déjà dans l'image I et qui, quelle que soit la modification $T_{j,k}$, après application de cette modification $T_{j,k}$, occupent une position qui existe aussi déjà dans l'image I et pour lesquels la position « m- $T_{j,k}.p$ » occupe une position qui existe aussi déjà dans l'image I ;
l'étape b) étant exécutée avec au moins deux angles $\alpha_j$ différents et, pour chaque angle $\alpha_j$, avec au moins deux facteurs $y_k$ différents, de manière à obtenir au moins quatre images transformées $I_{j,k}$ différentes ;
l'image transformée $I_{j,k}$ obtenue à l'issue du calcul de ce K-incrément comportant uniquement des pixels dont les positions appartiennent à l'ensemble E,

c) pour chaque image transformée $I_{j,k}$ différente, calculer une p-variation $W_{j,k}$ de cette image transformée à partir desdits K-incréments calculés, ce calcul d'une p-variation $W_{j,k}$ étant réalisé à partir des seuls pixels de l'image $I_{j,k}$ qui occupent une position appartenant à un ensemble E, cet ensemble E comportant seulement des positions qui existent déjà dans l'image I et qui, quelle que soit la modification $T_{j,k}$, après application de cette modification $T_{j,k}$, occupent une position qui existe aussi déjà dans l'image I ;
d) estimer les termes $\beta_j$ de la régression statistique suivante :

$$\log(|W_{j,k}|) = \log(|u_{jk}|^2)*H + \beta_j + \varepsilon_{j,k} ,$$

où :

- H est l'exposant de Hurst de l'image acquise ;
- $\varepsilon_{j,k}$ est un terme d'erreur de la régression dont les propriétés statistiques sont prédéterminées ;puis, tester l'égalité des termes $\beta_j$ entre eux à une marge d'erreur prédéterminée près, la texture de l'image étant identifiée comme isotrope si une telle égalité est trouvée à l'issue du test et étant identifiée comme anisotrope sinon.

**Patentansprüche**

1. Verfahren zur Identifizierung der Anisotropie der Textur eines digitalen Bildes, umfassend:

a) die Erfassung eines digitalen Bildes (2), das von Pixeln gebildet wird, wobei jedes Pixel einer Lichtstärke und einer Position im Raum $Z^d$ zugeordnet ist, wobei d eine natürliche ganze Zahl größer oder gleich zwei ist;

und **dadurch gekennzeichnet, dass** es außerdem umfasst:

b) die automatische Transformation des erfassten Bildes, um ein transformiertes Bild $I_{j,k}$ zu erhalten, wobei die Transformation die Anwendung einer Modifikation $T_{j,k}$ des Bildes umfasst, welche eine Drehung jedes Pixels des erfassten Bildes um einen Winkel $\alpha_j$ um einen Punkt oder eine Achse aus einer Position in eine andere bewirkt und welche das Bild um einen Faktor $y_k$ vergrößert oder verkleinert, wobei $\alpha_j$ = arg($u_{jk}$) und $y_k$ = |$u_{jk}$|$^2$ ist, wobei $u_{jk}$ ein Vektor aus $Z^2$\{(0,0)]} ist, welcher die Modifikation $T_{j,k}$ vollständig charakterisiert, wobei die Indizes j und k den Winkel $\alpha_j$ bzw. den Faktor $y_k$ eindeutig identifizieren, wobei die Modifikation $T_{j,k}$ aufweist:

- für d = 2 die folgende Matrixform:

$$T_{j,k} = \gamma_k \begin{pmatrix} \cos(\alpha_j) & -\sin(\alpha_j) \\ \sin(\alpha_j) & \cos(\alpha_j) \end{pmatrix}$$

- und für d = 3 eine der folgenden Matrixformen oder eine Zusammensetzung dieser Matrixformen:

$$T_{j,k} = \begin{pmatrix} \cos(\alpha_j) & -\sin(\alpha_j) & 0 \\ \sin(\alpha_j) & \cos(\alpha_j) & 0 \\ 0 & 0 & \gamma_k \end{pmatrix} \text{ oder } \begin{pmatrix} \cos(\alpha_j) & 0 & -\sin(\alpha_j) \\ 0 & \gamma_k & 0 \\ \sin(\alpha_j) & 0 & \cos(\alpha_j) \end{pmatrix}$$

$$\text{oder } \begin{pmatrix} \gamma_k & 0 & 0 \\ 0 & \cos(\alpha_j) & -\sin(\alpha_j) \\ 0 & \sin(\alpha_j) & \cos(\alpha_j) \end{pmatrix}$$

wobei das transformierte Bild erhalten wird, indem die Koordinaten der Position jedes Pixels mit der Matrix $T_{j,k}$ multipliziert werden,
anschließend für jedes Bild, auf welches eine Modifikation $T_{j,k}$ angewendet worden ist, die Berechnung eines K-Inkrements $V_{j,k}[m]$ für jedes Pixel mit der Position m des transformierten Bildes, wobei dieses K-Inkrement durch Anwendung eines Faltungskerns v mittels der folgenden Formel berechnet wird:

$$V_{j,k}[m] = \sum_{p \in [0,L]^d} v[p] \cdot Z[m - T_{j,k} \cdot p]$$

wobei:

- das Produkt $T_{j,k} \cdot p$ der Anwendung der Modifikation $T_{j,k}$ auf das Pixel entspricht, welches ursprünglich die Position p im Bild I hatte;
- der Faltungskern v eine lineare Filterung realisiert, die ein charakteristisches Polynom $Q_v(z)$ und einen endlichen Träger $[0,L]^d$ besitzt, wobei v[p] der Wert des Faltungskerns v für die Position p ist, wobei das charakteristische Polynom $Q_v(z)$ durch die folgende Formel definiert ist:

$$\forall z \in \mathbb{R}^d, Q_v(z) = \sum_{p \in [0,L]^d} v[p] z^p$$

und die folgende Bedingung erfüllt:

Für $\forall a \in [0,K]^d$ mit $|a| \leq K$ gilt $\dfrac{\partial^a Q_v}{\partial z_1^{a_1} \dots \partial z_d^{a_d}}$ (1,...,1)=0,

wobei:

- L ein erfasster Vektor aus $[0, N]^d$ ist, welcher den Kern v parametrisiert,
- N ein $N^d$ angehörender Vektor ist, der die Größe des Bildes codiert und dessen Komponenten streng positive natürliche ganze Zahlen sind;
- die Konstante K eine erfasste von null verschiedene natürliche ganze Zahl ist;
- z ein Vektor von Komponenten $z_1$, $z_2$, ..., $z_d$ ist;
- $z^p$ das Monom $z_1^{p1}*z_2^{p2}*...*z_d^{pd}$ bezeichnet;
- $\partial^{|a|}Q_v/\partial z_1^{a1}...\partial z_d^{ad}$ die partielle Ableitung des Polynoms $Q_v(z)$ nach den Komponenten des Vektors z ist, wobei das Symbol $\partial z_i^{ai}$ eine Differenzierung des Polynoms $Q_v(z)$ der Ordnung $a_i$ nach der Variablen $z_i$ angibt, wobei $z_i$ die i-te Komponente des Vektors z und $a_i$ die i-te Komponente des Vektors a bezeichnet, wobei i ein ganzzahliger Index ist, der größer oder gleich 0 und kleiner oder gleich d ist;

wobei die Berechnung der K-Inkremente ausgehend nur von denjenigen Pixeln des Bildes durchgeführt wird, welche eine Position m einnehmen, die einer Menge E angehört, wobei diese Menge E nur Positionen m umfasst, welche bereits im Bild I existieren und welche unabhängig von der Modifikation $T_{j,k}$ nach Anwendung dieser Modifikation $T_{j,k}$ eine Position einnehmen, welche ebenfalls bereits im Bild I existiert, und für welche die Position "$m-T_{j,k} \cdot p$" eine Position einnimmt, welche ebenfalls bereits im Bild I existiert; wobei das transformierte Bild $I_{j,k}$, das nach Abschluss der Berechnung dieses K-Inkrements erhalten wird, ausschließlich Pixel umfasst, deren Positionen der Menge E angehören,
wobei der Schritt b) mit wenigstens zwei verschiedenen Winkeln $\alpha_j$ und für jeden Winkel $\alpha_j$ mit wenigstens zwei verschiedenen Faktoren $y_k$ ausgeführt wird, so dass wenigstens vier verschiedene transformierte Bilder $I_{j,k}$ erhalten werden;

c) für jedes der verschiedenen transformierten Bilder $I_{j,k}$ die Berechnung einer p-Variation $W_{j,k}$ dieses transformierten Bildes anhand der berechneten K-Inkremente;
d) die Schätzung der Terme $\beta_j$ der folgenden statistischen Regression:

$$\log(|W_{j,k}|) = \log(|u_{jk}|^2)*H + \beta_j + \varepsilon_{j,k},$$

wobei:

- H der Hurst-Exponent des erfassten Bildes ist;
- $\varepsilon_{j,k}$ ein Fehlerterm der Regression ist, dessen statistische Eigenschaften vorbestimmt sind;

anschließend den Test auf Gleichheit der Terme $\beta_j$ bis auf eine vorbestimmte Abweichung genau, wobei die Textur des Bildes als isotrop identifiziert wird, falls am Ende des Tests eine solche Gleichheit festgestellt wird, und andernfalls als anisotrop identifiziert wird.

2. Verfahren nach Anspruch 1, wobei der in Schritt b) verwendete Kern v gleich dem Faltungsprodukt eines beliebigen Faltungskerns mit dem Kern ist, der wie folgt definiert ist:

$$v[p] = (-1)^{|p|} \times C_{L_1}^{\cdot p_1} \times \ldots \times C_{L_d}^{\cdot p_d} = (-1)^{|p|} \times \prod_{i=1}^{d} \frac{L_i!}{p_i! \times (L_i - p_i)!}$$

falls der Vektor p $[0,L]^d$ angehört, und andernfalls v[p] = 0, wobei die Terme $C^p_L$ Binomialkoeffizienten bezeichnen, wobei die Konstante K dann gleich K = |L|-1 ist.

3. Verfahren nach einem der vorhergehenden Ansprüche, wobei die in Schritt c) berechneten p-Variationen quadratische Variationen sind, die gemäß der folgenden Formel berechnet werden:

$$W_{j,k}[m] = \frac{1}{n_E} \sum_{m \in E} (V_{j,k}[m])^q$$

wobei q=2 ist und nE die Anzahl der Positionen ist, welche der Menge E angehören.

4.  Verfahren nach einem der vorhergehenden Ansprüche, wobei die Gleichheit der Terme $\beta_j$ mittels eines statistischen Fisher-Tests getestet wird.

5.  Verfahren nach Anspruch 4, wobei Schritt d) die automatische Berechnung des p-Wertes des statistischen Tests umfasst, um den Grad der Anisotropie des Bildes zu quantifizieren.

6.  Verfahren zur automatischen Klassifizierung digitaler Bilder in Abhängigkeit von der Anisotropie ihrer Textur, wobei dieses Verfahren de Erfassung mehrerer Bilder umfasst, die jeweils von mehreren Pixeln gebildet werden; **dadurch gekennzeichnet, dass** es umfasst:

    - die automatische Berechnung, für jedes der erfassten Bilder, ihres jeweiligen Grades der Anisotropie mittels des Verfahrens von Anspruch 5;
    - die Klassifizierung der erfassten digitalen Bilder mithilfe eines automatischen Klassifikators in Abhängigkeit vom Grad der Anisotropie, der für jedes der Bilder berechnet wurde.

7.  Informationsaufzeichnungsmedium (16), **dadurch gekennzeichnet, dass** es Anweisungen zur Durchführung eines Verfahrens gemäß einem der vorhergehenden Ansprüche, wenn diese Anweisungen von einem elektronischen Rechner ausgeführt werden, umfasst.

8.  Elektronischer Rechner (14) zur Durchführung eines der Ansprüche 1 bis 6, wobei dieser Rechner dafür programmiert ist, automatisch ein digitales Bild (2) zu erfassen, das von Pixeln gebildet wird, wobei jedes Pixel einer Lichtstärke und einer Position im Raum $Z^d$ zugeordnet ist, wobei d eine natürliche ganze Zahl größer oder gleich zwei ist; wobei der elektronische Rechner **dadurch gekennzeichnet ist, dass** er außerdem dafür programmiert ist:

    b) das erfasste Bild automatisch zu transformieren, um ein transformiertes Bild $I_{j,k}$ zu erhalten, wobei die Transformation die Anwendung einer Modifikation $T_{j,k}$ des Bildes umfasst, welche eine Drehung jedes Pixels des erfassten Bildes um einen Winkel $\alpha_j$ um einen Punkt oder eine Achse aus einer Position in eine andere bewirkt und welche das Bild um einen Faktor yk vergrößert oder verkleinert, wobei $\alpha_j$ = arg(ujk) und yk = |ujk|2 ist, wobei ujk ein Vektor aus $Z$ 2\{(0,0)]} ist, welcher die Modifikation $T_{j,k}$ vollständig charakterisiert, wobei die Indizes j und k den Winkel $\alpha_j$ bzw. den Faktor yk eindeutig identifizieren, wobei die Modifikation $T_{j,k}$ aufweist:

    - für d = 2 die folgende Matrixform:

$$T_{j,k} = \gamma_k \begin{pmatrix} \cos(\alpha_j) & -\sin(\alpha_j) \\ \sin(\alpha_j) & \cos(\alpha_j) \end{pmatrix}$$

    - und für d = 3 eine der folgenden Matrixformen oder eine Zusammensetzung dieser Matrixformen:

$$T_{j,k} = \begin{pmatrix} \cos(\alpha_j) & -\sin(\alpha_j) & 0 \\ \sin(\alpha_j) & \cos(\alpha_j) & 0 \\ 0 & 0 & \gamma_k \end{pmatrix}, \quad oder \quad \begin{pmatrix} \cos(\alpha_j) & 0 & -\sin(\alpha_j) \\ 0 & \gamma_k & 0 \\ \sin(\alpha_j) & 0 & \cos(\alpha_j) \end{pmatrix}$$

$$oder \quad \begin{pmatrix} \gamma_k & 0 & 0 \\ 0 & \cos(\alpha_j) & -\sin(\alpha_j) \\ 0 & \sin(\alpha_j) & \cos(\alpha_j) \end{pmatrix}$$

    wobei das transformierte Bild erhalten wird, indem die Koordinaten der Position jedes Pixels mit der Matrix $T_{j,k}$ multipliziert werden,
    anschließend für jedes Bild, auf welches eine Modifikation $T_{j,k}$ angewendet worden ist, ein K-Inkrement $V_{j,k}[m]$ für jedes Pixel mit der Position m des transformierten Bildes zu berechnen, wobei dieses K-Inkrement durch Anwendung eines Faltungskerns v mittels der folgenden Formel berechnet wird:

$$V_{j,k}[m] = \sum_{p \in [0,L]^d} v[p] \cdot Z[m - T_{j,k} \cdot p]$$

wobei:

- das Produkt $T_{j,k} \cdot p$ der Anwendung der Modifikation $T_{j,k}$ auf das Pixel entspricht, welches ursprünglich die Position p im Bild I hatte;
- der Faltungskern v eine lineare Filterung realisiert, die ein charakteristisches Polynom $Q_v(z)$ und einen endlichen Träger $[0,L]^d$ besitzt, wobei v[p] der Wert des Faltungskerns v für die Position p ist, wobei das charakteristische Polynom $Q_v(z)$ durch die folgende Formel definiert ist:

$$\forall z \in \mathbb{R}^d, Q_v(z) = \sum_{p \in [0,L]^d} v[p] z^p$$

und die folgende Bedingung erfüllt:
Für $\forall a \in [0,K]^d$ mit $|a| \le K$ gilt

$$\frac{\partial^a Q_v}{\partial z_1^{a_1} \ldots \partial z_d^{a_d}} \ (1,\ldots,1) = 0,$$

wobei:

- L ein erfasster Vektor aus $[0, N]^d$ ist, welcher den Kern v parametrisiert,
- N ein $N^d$ angehörender Vektor ist, der die Größe des Bildes codiert und dessen Komponenten streng positive natürliche ganze Zahlen sind;
- die Konstante K eine erfasste von null verschiedene natürliche ganze Zahl ist;
- z ein Vektor von Komponenten $z_1, z_2, \ldots, z_d$ ist;
- $z^p$ das Monom $z_1^{p1} * z_2^{p2} * \ldots * z_d^{pd}$ bezeichnet;
- $\partial|a|Q_v/\partial z_1^{a1} \ldots \partial z_d^{ad}$ die partielle Ableitung des Polynoms $Q_v(z)$ nach den Komponenten des Vektors z ist, wobei das Symbol $\partial z_i^{ai}$ eine Differenzierung des Polynoms $Q_v(z)$ der Ordnung $a_i$ nach der Variablen $z_i$ angibt, wobei $z_i$ die i-te Komponente des Vektors z und $a_i$ die i-te Komponente des Vektors a bezeichnet, wobei i ein ganzzahliger Index ist, der größer oder gleich 0 und kleiner oder gleich d ist;

wobei die Berechnung der K-Inkremente ausgehend nur von denjenigen Pixeln des Bildes durchgeführt wird, welche eine Position m einnehmen, die einer Menge E angehört, wobei diese Menge E nur Positionen m umfasst, welche bereits im Bild I existieren und welche unabhängig von der Modifikation $T_{j,k}$ nach Anwendung dieser Modifikation $T_{j,k}$ eine Position einnehmen, welche ebenfalls bereits im Bild I existiert, und für welche die Position "m-$T_{j,k} \cdot p$" eine Position einnimmt, welche ebenfalls bereits im Bild I existiert;
wobei der Schritt b) mit wenigstens zwei verschiedenen Winkeln $\alpha_j$ und für jeden Winkel $\alpha_j$ mit wenigstens zwei verschiedenen Faktoren $y_k$ ausgeführt wird, so dass wenigstens vier verschiedene transformierte Bilder $I_{j,k}$ erhalten werden; wobei das transformierte Bild $I_{j,k}$, das nach Abschluss der Berechnung dieses K-Inkrements erhalten wird, ausschließlich Pixel umfasst, deren Positionen der Menge E angehören,
c) für jedes der verschiedenen transformierten Bilder $I_{j,k}$ eine p-Variation $W_{j,k}$ dieses transformierten Bildes anhand der berechneten K-Inkremente zu berechnen, wobei diese Berechnung einer p-Variation $W_{j,k}$ ausgehend nur von denjenigen Pixeln des Bildes $I_{j,k}$ durchgeführt wird, welche eine Position einnehmen, die einer Menge E angehört, wobei diese Menge E nur Positionen umfasst, welche bereits im Bild I existieren und welche unabhängig von der Modifikation $T_{j,k}$ nach Anwendung dieser Modifikation $T_{j,k}$ eine Position einnehmen, welche ebenfalls bereits im Bild I existiert;
d) die Terme $\beta_j$ der folgenden statistischen Regression zu schätzen:

$$\log(|W_{j,k}|) = \log(|u_{j,k}|^2)*H + \beta_j + \varepsilon_{j,k},$$

wobei:

- H der Hurst-Exponent des erfassten Bildes ist;
- $\varepsilon_{j,k}$ ein Fehlerterm der Regression ist, dessen statistische Eigenschaften vorbestimmt sind;

anschließend die Gleichheit der Terme $\beta_j$ bis auf eine vorbestimmte Abweichung genau zu testen, wobei die Textur des Bildes als isotrop identifiziert wird, falls am Ende des Tests eine solche Gleichheit festgestellt wird, und andernfalls als anisotrop identifiziert wird.

**Claims**

1. Method for identifying the anisotropy of the texture of a digital image, including:

   a) the acquisition of a digital image (2) formed of pixels, each pixel being associated with a luminous intensity and with a position in the space $\mathbb{Z}^d$, where d is a natural integer greater than or equal to two;

   and **characterized in that** it also includes:

   b) the automatic transformation of the acquired image to obtain a transformed image $I_{j,k}$, the transformation including the application of a modification $T_{j,k}$ of the image that causes each pixel of the acquired image to turn by an angle $\alpha_j$ from one position to another about a point or an axis and that enlarges or reduces the image by a factor $y_k$, where $\alpha_j = \arg(u_{jk})$ and $y_k = |u_{jk}|^2$, $u_{jk}$ being a vector of $\mathbb{Z}^2 \backslash \{(0,0)\}$ that completely characterizes the modification $T_{j,k}$, the indices j and k respectively and uniquely identifying the angle $\alpha_j$ and the factor $y_k$, the modification $T_{j,k}$ having:

   - for d = 2, the following matrix form:

$$T_{j,k} = \gamma_k \begin{pmatrix} \cos(\alpha_j) & -\sin(\alpha_j) \\ \sin(\alpha_j) & \cos(\alpha_j) \end{pmatrix}$$

   - and, for d = 3, one of the following matrix forms or a composition of these matrix forms:

$$T_{j,k} = \begin{pmatrix} \cos(\alpha_j) & -\sin(\alpha_j) & 0 \\ \sin(\alpha_j) & \cos(\alpha_j) & 0 \\ 0 & 0 & \gamma_k \end{pmatrix}, \text{or} \begin{pmatrix} \cos(\alpha_j) & 0 & -\sin(\alpha_j) \\ 0 & \gamma_k & 0 \\ \sin(\alpha_j) & 0 & \cos(\alpha_j) \end{pmatrix}, \text{or} \begin{pmatrix} \gamma_k & 0 & 0 \\ 0 & \cos(\alpha_j) & -\sin(\alpha_j) \\ 0 & \sin(\alpha_j) & \cos(\alpha_j) \end{pmatrix}.$$

   the transformed image being obtained by multiplying the coordinates of the position of each pixel by the matrix $T_{j,k}$,
   then, for each image to which a modification $T_{j,k}$ has been applied, the calculation of a K-increment $V_{j,k}[m]$ for each pixel at position m of the transformed image, this K-increment being calculated by application of a convolution kernel v by means of the following formula:

$$V_{j,k}[m] = \sum_{p \in [0,L]^d} v[p] \cdot Z[m - T_{j,k} \cdot p]$$

where:

- the product $T_{j,k}.p$ corresponds to the application of the modification $T_{j,k}$ to the pixel that was initially at the position p in the image I;
- the convolution kernel v performs linear filtering having a characteristic polynomial $Q_v(z)$ and a finite support $[0,L]^d$, $v[p]$ being the value of the convolution kernel v for the position p, the characteristic polynomial $Q_v(z)$ being defined by the following formula:

$$\forall z \in \mathbb{R}^d, Q_v(z) = \sum_{p \in [0,L]^d} v[p] z^p$$

and satisfying the following condition:

$$\forall a \in [0,K]^d \quad \text{such that} \quad |a| \leq K \quad \text{then} \quad \frac{\partial^{|a|} Q_v}{\partial z_1^{a_1} \ldots \partial z_d^{a_d}}(1,\ldots,1) = 0$$

where:

- L is a vector acquired from $[0, N]^d$ that sets the parameters of the kernel v,

- N is a vector belonging to $\mathbb{N}^d$ that codes the size of the image and the components of which are strictly positive natural integers;
- the constant K is an acquired non-zero natural integer;
- z is a vector with components $z_1$, $z_2$, ..., $z_d$;
- $z^p$ designates the mononomial $z_1^{p1*} z_2^{p2*} \ldots {*}z_d^{pd}$;
- $\partial^{|a|} Q_v / \partial z_1^{a1} \ldots \partial z_d^{ad}$ is the partial derivative of the polynomial $Q_v(z)$ with respect to the components of the vector z, the symbol $\partial z_i^{ai}$ indicating a differentiation of the polynomial $Q_v(z)$ of order $a_i$ with respect to the variable $z_i$, where $z_i$ designates the $i^{th}$ component of the vector z and $a_i$ the $i^{th}$ component of the vector a, i being an integer index greater than or equal to 0 and less than or equal to d;

the calculation of the K-increments being based on only the pixels of the image that occupy a position m belonging to a set E, that set E including only positions m that exist already in the image I and that, regardless of the modification $T_{j,k}$, after application of that modification $T_{j,k}$, occupy a position that also exists already in the image I and for which the position "m- $T_{j,k}.p$" occupies a position that also exists already in the image I; the transformed image $I_{j,k}$ obtained following the calculation of this K-increment including only pixels the positions of which belong to the set E, the step b) being executed with at least two different angles $\alpha_j$ and, for each angle $\alpha_j$, with at least two different factors $y_k$, so as to obtain at least four different transformed images $I_{j,k}$;

c) for each different transformed image $I_{j,k}$, the calculation of a p-variation $W_{j,k}$ of that transformed image from said calculated K-increments;

d) the estimation of the terms $\beta_j$ of the following statistical regression:

$$\log(|W_{j,k}|) = \log(|u_{jk}|^2){*}H + \beta_j + \varepsilon_{j,k,}$$

where:

- H is the Hurst exponent of the acquired image;
- $\varepsilon_{j,k}$ is an error term of the regression the statistical properties of which are predetermined;

then testing the equality of the terms $\beta_j$ to one another to within a predetermined error margin, the texture of the image being identified as isotropic if such equality is found following the test and being identified as anisotropic otherwise.

2. Method according to Claim 1, in which the kernel v used during the step b) is equal to the convolution product of any convolution kernel with the kernel defined as follows:

$$v[p] = (-1)^{|p|} \times C_{L_1}^{p_1} \times \ldots \times C_{L_d}^{p_d} = (-1)^{|p|} \times \prod_{i=1}^{d} \frac{L_i!}{p_i! \times (L_i - p_i)!}$$

if the vector p belongs to $[0,L]^d$ and $v[p] = 0$ otherwise, where the terms $C^p_L$ designate binomial coefficients, the constant K then being equal to $K = |L| -1$.

3. Method according to either one of the preceding claims, in which the p-variations calculated during the step c) are quadratic variations calculated in accordance with the following formula:

$$W_{j,k}[m] = \frac{1}{n_E} \sum_{m \in E} (V_{j,k}[m])^q$$

where q=2 and $n_E$ is the number of positions that belong to the set E.

4. Method according to any one of the preceding claims, in which the equality of the terms $\beta_j$ is tested by means of a Fisher statistical test.

5. Method according to Claim 4, in which the step d) includes the automatic calculation of the p-value of the statistical test for quantifying the degree of anisotropy of the image.

6. Method for automatically classifying digital images as a function of the anisotropy of their texture, this method including the acquisition of a plurality of images each formed of a plurality of pixels,
   **characterized in that** it includes:

   - for each of the acquired images, the automatic calculation of their respective degree of anisotropy by means of the method of Claim 5;
   - the classification of the acquired digital images by means of an automatic classifier as a function of the degree of anisotropy calculated for each of said images.

7. Information storage medium (16) **characterized in that** it contains instructions for the execution of a method according to any one of the preceding claims when these instructions are executed by an electronic computer.

8. Electronic computer (14) for implementing any one of Claims 1 to 6, this computer being programmed to acquire automatically a digital image (2) formed of pixels, each pixel being associated with a luminous intensity and with a position in the space $\mathbb{Z}^d$, where d is a natural integer greater than or equal to two;
   this electronic computer being **characterized in that** it is also programmed:

   b) to transform the acquired image automatically to obtain a transformed image $I_{j,k}$, the transformation including the application of a modification $T_{j,k}$ of the image that causes each pixel of the acquired image to turn by an angle $\alpha_j$ from one position to another about a point or an axis and that enlarges or reduces the image by a factor $y_k$, where $\alpha_j = \arg(u_{jk})$ and $y_k = |u_{jk}|^2$, $u_{jk}$ being a vector of $\mathbb{Z}^2 \setminus \{(0,0)\}$ that completely characterizes the modification $T_{j,k}$, the indices j and k respectively and uniquely identifying the angle $\alpha_j$ and the factor $y_k$, the modification $T_{j,k}$ having:

   - for d = 2, the following matrix form:

$$T_{j,k} = \gamma_k \begin{pmatrix} \cos(\alpha_j) & -\sin(\alpha_j) \\ \sin(\alpha_j) & \cos(\alpha_j) \end{pmatrix}$$

- and for d = 3, one of the following matrix forms or a composition of these matrix forms:

$$T_{j,k} = \begin{pmatrix} \cos(\alpha_j) & -\sin(\alpha_j) & 0 \\ \sin(\alpha_j) & \cos(\alpha_j) & 0 \\ 0 & 0 & \gamma_k \end{pmatrix}, \text{or} \begin{pmatrix} \cos(\alpha_j) & 0 & -\sin(\alpha_j) \\ 0 & \gamma_k & 0 \\ \sin(\alpha_j) & 0 & \cos(\alpha_j) \end{pmatrix}, \text{or} \begin{pmatrix} \gamma_k & 0 & 0 \\ 0 & \cos(\alpha_j) & -\sin(\alpha_j) \\ 0 & \sin(\alpha_j) & \cos(\alpha_j) \end{pmatrix}.$$

the transformed image being obtained by multiplying the coordinates of the position of each pixel by the matrix $T_{j,k}$,
then, for each image to which a modification $T_{j,k}$ has been applied, calculating a K-increment $V_{j,k}[m]$ for each pixel at position m of the transformed image, this K-increment being calculated by application of a convolution kernel v by means of the following formula:

$$V_{j,k}[m] = \sum_{p \in [0,L]^d} v[p] \cdot Z[m - T_{j,k} \cdot p]$$

where:

- the product $T_{j,k}.p$ corresponds to the application of the modification $T_{j,k}$ of the pixel that was initially at the position p in the image I;
- the convolution kernel v performs linear filtering having a characteristic polynomial $Q_v(z)$ and a finite support $[0,L]^d$, v[p] being the value of the convolution kernel v for the position p, the characteristic polynomial $Q_v(z)$ being defined by the following formula:

$$\forall z \in \mathbb{R}^d, Q_v(z) = \sum_{p \in [0,L]^d} v[p] z^p$$

and satisfying the following condition:

$$\forall a \in [0,K]^d \quad \text{such that} \quad |a| \le K \quad \text{then} \quad \frac{\partial^{|a|} Q_v}{\partial z_1^{a_1} ... \partial z_d^{a_d}}(1,...,1) = 0$$

where:

- L is a vector acquired from $[0, N]^d$ that sets the parameters of the kernel v,

- N is a vector belonging to $\mathbb{N}^d$ that codes the size of the image and the components of which are strictly positive natural integers;
- the constant K is an acquired non-zero natural integer;
- z is a vector with components $z_1, z_2, ..., z_d$;
- $z^p$ designates the mononomial $z_1^{p1*} z_2^{p2*}...*z_d^{pd}$;
- $\partial^{|a|} Q_v/\partial z_1^{a1}...\partial z_d^{ad}$ is the partial derivative of the polynomial $Q_v(z)$ with respect to the components of the vector z, the symbol $\partial z_i^{ai}$ indicating a differentiation of the polynomial $Q_v(z)$ of order $a_i$ with respect to the variable $z_i$, where $z_i$ designates the $i^{th}$ component of the vector z and $a_i$ the $i^{th}$

component of the vector a, i being an integer index greater than or equal to 0 and less than or equal to d;

the calculation of the K-increments being based on only the pixels of the image that occupy a position m belonging to a set E, that set E including only positions m that exist already in the image I and that, regardless of the modification $T_{j,k}$, after application of that modification $T_{j,k}$, occupy a position that also exists already in the image I and for which the position "m- $T_{j,k}$.p" occupies a position that also exists already in the image I;

the step b) being executed with at least two different angles $\alpha_j$ and, for each angle $\alpha_j$, with at least two different factors $y_k$, so as to obtain at least four different transformed images $I_{j,k}$; the transformed image $I_{j,k}$ obtained following the calculation of this K-increment including only pixels the positions of which belong to the set E,

c) for each different transformed image $I_{j,k}$, to calculate a p-variation $W_{j,k}$ of that transformed image from said calculated K-increments, this calculation of a p-variation $W_{j,k}$ being based on only the pixels of the image $I_{j,k}$ that occupy a position belonging to a set E, that set E including only positions that exist already in the image I and that, regardless of the modification $T_{j,k}$, after application of that modification $T_{j,k}$, occupy a position that also exists already in the image I;

d) to estimate the terms $\beta_j$ of the following statistical regression:

$$\log(|W_{j,k}|) = \log(|u_{jk}|^2)*H + \beta_j + \varepsilon_{j,k,}$$

where:

- H is the Hurst exponent of the acquired image;
- $\varepsilon_{j,k}$ is an error term of the regression the statistical properties of which are predetermined; then testing the equality of the terms $\beta_j$ to one another to within a predetermined error margin, the texture of the image being identified as isotropic if such equality is found following the test and being identified as anisotropic otherwise.

Fig. 1A    2

Fig. 1B

Fig. 1C

Fig. 1D

16 ⇔ 14

18

12

Fig. 2

20

22

24

26

28

Fig. 3

30

31

32

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P.PODSIADO ; G.W. STACHOWIAK.** The development of the modified Hurst orientation transform for the characterization of surface topography of wear particles. *Tribology Letters,* 1998, vol. 4, 215-229
- **F. RICHARD et al.** Statistical tests of anisotropy for fractional brownian textures. Application to full-field digital mammography. *J. Math. Imaging. Vis.,* 2010, vol. 36, 227-240
- Introduction to Texture Analysis. **E.R. DAVIES et al.** Handbook of Texture Analysis. World Scientific, Octobre 2008
- **ROBERT M. HARALICK et al.** Textural features for image classification. *IEEE Transactions on Systems, Man and Cybernetics,* Novembre 1973, vol. SMC-3 (6), 610-621
- **J. P. CHILÈS et al.** Geostatistics : Modeling Spatial Uncertainty. J. Wiley, 2012
- **P. HALL et al.** Properties of nonparametric estimators of autocovariance for stationary random fields. *Probability Theory and Related Fields,* 1994, (3), 399-424